# EUROPEAN PATENT APPLICATION

(11) **EP 4 461 168 A1**
(43) Date of publication of application: **13.11.2024**
(21) Application number: 24173758.4
(22) Date of filing: 02.05.2024
(51) Int. Cl.: A47J 31/44

(54) **COFFEE MACHINE WITH MILK SENSOR**

(30) Priority: 11.05.2023 IT 202300009369
(71) Applicant: SIMONELLI GROUP S.P.A., 62020 Belforte del Chienti (MC) (IT)
(72) Inventor: CINGOLANI, Claudio Enrico, 62032 Camerino (MC) (IT); PARRINI, Mauro, 63821 Porto Sant'Elpidio (FM) (IT); GIGLI, Leonardo, 62014 Corridonia (MC) (IT)
(74) Representative: Cutropia, Gianluigi

(57) **Abstract**

A coffee machine (100) comprises a steam dispensing wand (1) having a dispensing nozzle (2) suitable for being immersed in milk (L) contained in a milk jug (200) to dispense steam into the milk and therefore heat and froth the milk, a steam generation system (101) to generate steam that is sent to said wand (1), and a control unit (102) to operate said steam generation system (101); the wand (1) comprises a milk sensor (3) suitable for detecting the presence of milk (L) and the type of milk contained in the milk jug (200).

## Description

The present invention relates to a coffee machine with a milk sensor.

In addition to coffee extraction, a more and more important function of coffee machines is the processing of milk, and in particular the provision of milk for the preparation of milk drinks. For such a purpose, coffee machines comprise a steam dispensing wand that is used to heat and froth the milk. The steam dispensing wand is immersed in the milk contained in a milk jug to inject hot steam that is used to heat the milk and create the desired foam.

In recent years, milk frothing recipes with a different milk temperature, i.e. cold, lukewarm or hot, have become popular. For such a purpose, the coffee machines available on the market are equipped with a steam dispensing wand having a temperature sensor or probe to detect the temperature of the milk in the milk jug. In such a way, the bar operator can set milk frothing recipes based on the desired milk temperature.

The demand for beverages with milk of vegetable or other origin than the animal one is rapidly increasing. As a result, there is a need to have different recipes, with a different control of the milk temperature, of the air or steam injection depending on the milk used in order to optimize the final quality of the milk product. However, the operator finds it difficult to recognize the type of milk that is being used and to associate the correct recipe based on the type of milk used.

US2022/104651A1 discloses a coffee machine with a steam wand to froth milk contained in a milk jug. Such a machine includes a temperature sensor arranged in the base of the machine for being disposed under the milk jug, and a level sensor arranged in the wand, above the milk jug, to detect the level of milk in the milk jug. However, such a machine does not have any sensor to detect the quality of the milk, such as a thermal conductivity sensor. In addition, the machine has a steam wand having a single steam dispensing channel. The machine also has a cleaning device that is obviously not a second steam dispensing channel of the wand, and is totally separated from the single steam dispensing channel of the wand. Ultimately, US2022/104651A1 contains no precepts for the realization of a steam dispensing wand with two conduits and for the provision of a conductivity sensor in the second conduit.

Moreover, in the coffee machine of US2022/104651A1, the temperature sensor is provided in the base and is not in contact with the milk contained in the milk jug. Therefore, according to such a prior document, a technician of the field would not think of using the temperature sensor as an electrode of an electrical conductivity sensor because the temperature sensor is not in contact with the milk.

US2021/321817A1 describes a milk frothing system having a measuring unit containing a thermal conductivity sensor which detects a thermal conductivity parameter indicative of the type of milk and is used to determine how much air is to be injected to obtain the perfect foam. The measuring unit also contains a temperature sensor. However, such a temperature sensor serves for a thermal drift for a correct calculation of the temperature-dependent conductivity. The foaming system includes a milk container with a milk line and one air feed system with an air duct. The air and the milk are mixed in a mixer to obtain foamed milk which is fed into a foamed milk duct by means of a pump. The measuring unit, which contains the conductivity and temperature sensor, is arranged in the foamed milk duct. The foamed milk duct leads to one or more dispensing nozzles to deliver the foamed milk into a cup and into a discharge nozzle communicating with the discharge. Therefore, such a system does not provide for a dispensing wand that delivers steam into a milk jug to froth the milk contained in the milk jug. The system directly dispenses foamed milk into a cup. The measuring unit of the system is not made to be integral with a steam dispensing wand of a coffee machine, but it is made to be integral with a duct that can feed milk or foamed milk.

US2021/321817A1 does not show in detail how the measuring unit is structurally made, nor does it explain how to integrate or mount the measuring unit into a steam dispensing wand of a coffee machine since such a system does not include any steam dispensing wand.

The purpose of the present invention is to eliminate the drawbacks of the prior art by providing a coffee machine that is capable of automating the milk processing method.

Another purpose is to provide such a coffee machine capable of automatically recognizing the presence or absence of milk in the milk jug and determining the type of milk in the milk jug in order to adjust the recipe set in the machine depending on the milk contained in the milk jug.

Another purpose is to provide such a coffee machine that is capable of reducing the wasted milk due to the incorrect processing and is therefore capable of ensuring a total energy saving of the machine during its daily use by optimizing the delivery of milk with the correct mode and time.

Another purpose is to provide such a coffee machine that allows to reduce the steam wasted in purging the wand, thus reducing the steam used and the energy used to generate the steam.

These purposes are achieved in accordance with the invention with the features of the appended independent claims.

Advantageous achievements of the invention appear from the dependent claims.

The coffee machine according to the invention is defined in claim 1.

Due to the provision of the milk sensor, the coffee machine according to the invention reduces the amount of wasted milk caused by the incorrect processing, achieving a total energy saving of the machine during its daily use by optimizing the provision of milk with the correct mode and time.

Advantageously, the coffee machine according to the invention also comprises a position sensor suitable for detecting the position of the wand. Such a position sensor interacts with a wand cleaning system, reducing the steam waste in purging the wand, thereby achieving a reduction in the steam used and in the energy used to generate the steam.

Further features of the invention will become clearer from the following detailed description, which refers to a purely illustrative and therefore non-limiting embodiment, illustrated in the attached drawings, wherein:
Fig. 1 is a side view of a coffee machine according to the invention, with the steam dispensing wand in closed position;
Fig. 2 is the same view as Fig. 1, with the steam dispensing wand in open position;
Fig. 3 is an axial view of the steam dispensing wand of the machine as Fig. 1;
Fig. 4 is an exploded view of the components of the steam dispensing wand of Fig. 3;
Fig. 5 is an axial view of the steam dispensing wand of Fig. 3 immersed in the milk contained in a milk jug;
Fig. 6 is a block diagram illustrating the operation of the steam generation system of the coffee machine according to the invention; and
Fig. 7 is a block diagram illustrating the control unit of the coffee machine according to the invention in greater detail.

With the aid of the Figures, the coffee machine according to the invention is described, it being overall indicated by reference numeral 100.

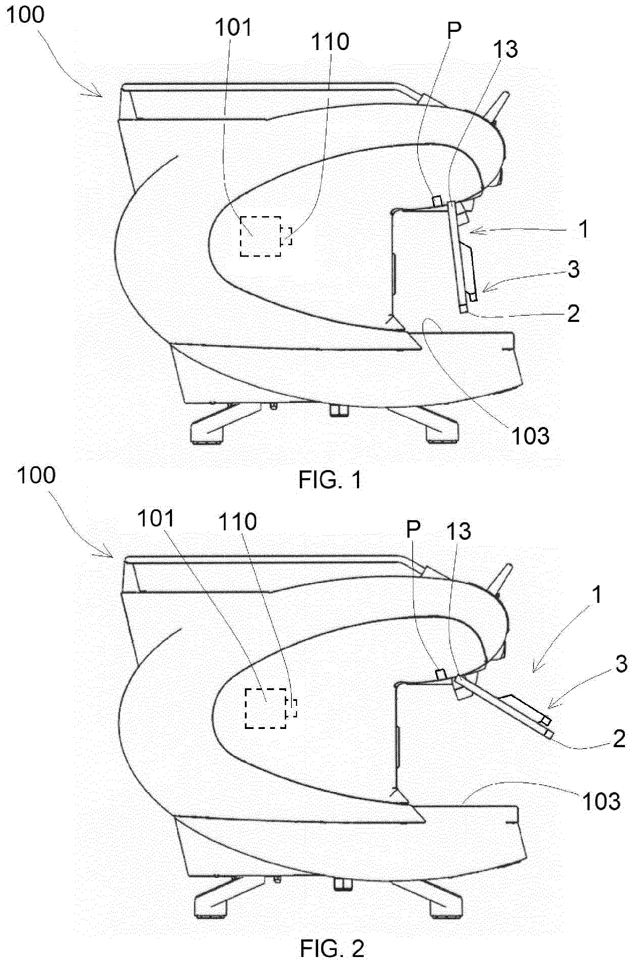

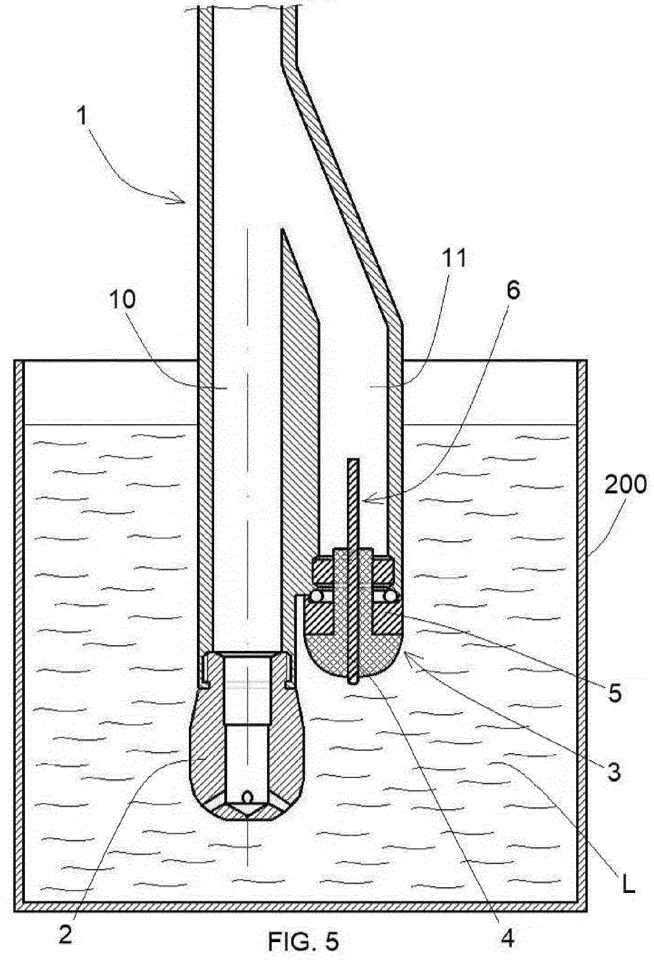

Now with reference to Figs. 1 and 2, the coffee machine (100) comprises a steam generation system (101) which generates steam that is sent to a steam dispensing wand (1) having a dispensing nozzle (2) suitable for dispensing steam. The dispensing nozzle (2) is suitable for being immersed in milk (L) (Fig. 5) contained in a milk jug (200) to dispense steam into the milk and therefore heat and froth the milk.

The steam generation system (101) is known and therefore is not illustrated in detail. In any case, such a steam generation system (101) generally comprises a boiler that brings boiling water and is connected to a pipe and a mechanical or electronic system for delivering the steam that is obtained from boiling the water to the wand (1). The steam generation system (101) has a regulating valve (110) consisting of a solenoid valve that can be of proportional type and regulates the flow of steam to be delivered to the wand (1), and a solenoid valve that can be of proportional type and regulates the flow of air to be injected into the milk to make the milk foam.

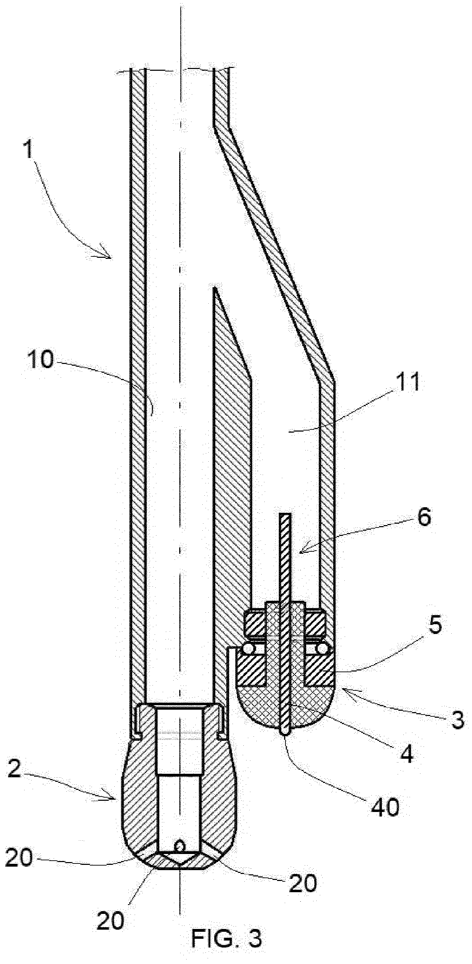

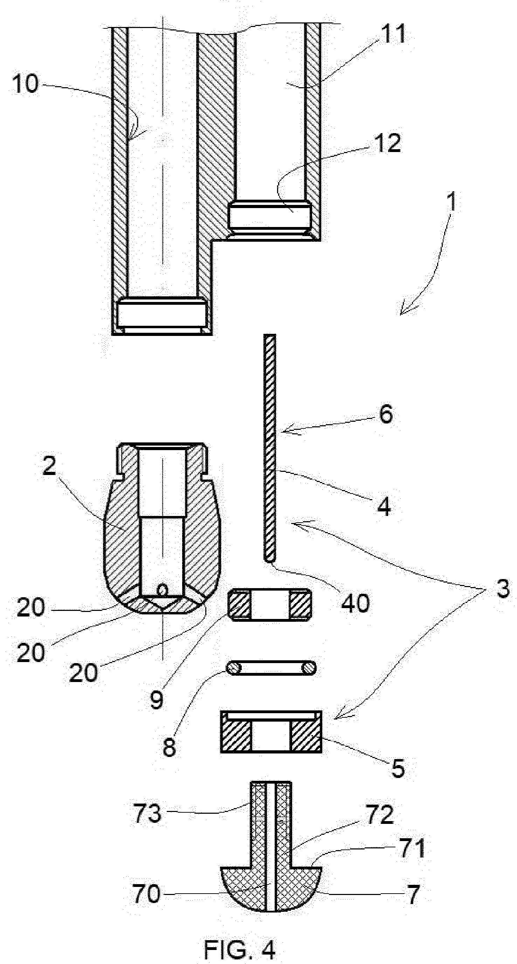

With reference to Figs. 3 and 4, the wand (1) comprises a main duct (10) that connects the steam generation system (101) with the dispensing nozzle (2). The dispensing nozzle (2) comprises a plurality of jet-breaker holes (20) for injecting steam and air into the milk.

According to the invention, the wand (1) comprises a milk sensor (3) suitable for detecting the presence of milk (L) and the type of milk in the milk jug (200).

The milk sensor (3) may be an electrical conductivity sensor suitable for detecting an electrical conductivity value of the milk, when the milk is in contact with the milk sensor (3), or the milk sensor (3) may be a capacitive sensor suitable for detecting a dielectric constant value of the milk when the milk is in contact with the milk sensor (3).

In any case, the milk sensor (3) comprises a first electrode (4) and a second electrode (5) arranged in the wand (1) so as to contact the milk (L) contained in the milk jug (200).

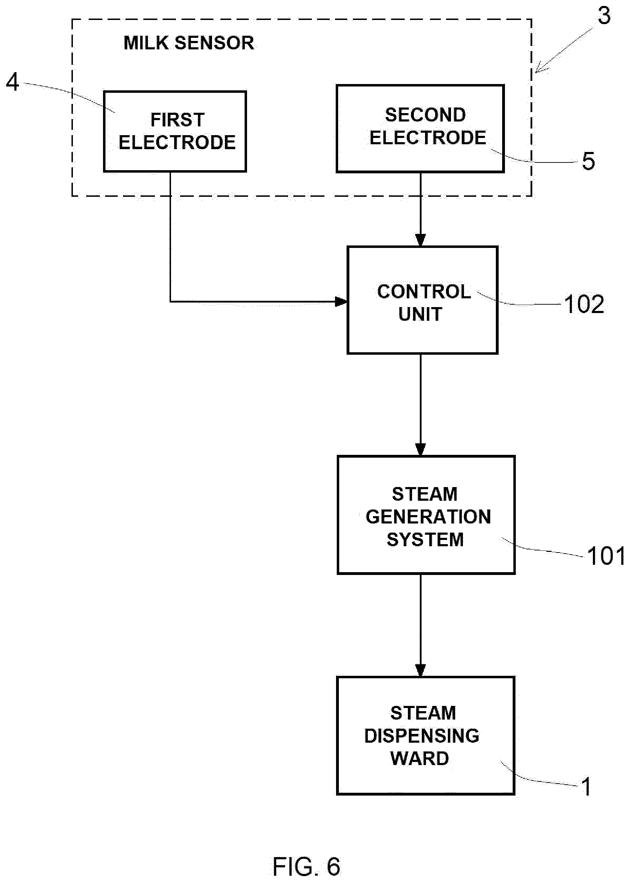

Referring to Fig. 6, the first electrode (4) and the second electrode (5) are electrically connected to a control unit (102) of the coffee machine. In such a case, the control unit (102) detects a potential difference between the two electrodes (4, 5) that varies according to the material arranged between the two electrodes.

With reference to Fig. 5, if the two electrodes (4, 5) of the milk sensor are immersed in the milk (L) contained in a milk jug (200), the milk sensor (3) serves as a capacitor in which the armatures are the two electrodes (4, 5) and the dielectric between the armatures is the milk (L). Therefore, the control unit (102) can detect an electrical conductivity value or dielectric constant of the milk.

It must be considered that the electrical conductivity value of the milk is different from the electrical conductivity value of the air; moreover, different types of milk (animal, vegetable or other nature) have different electrical conductivity values.

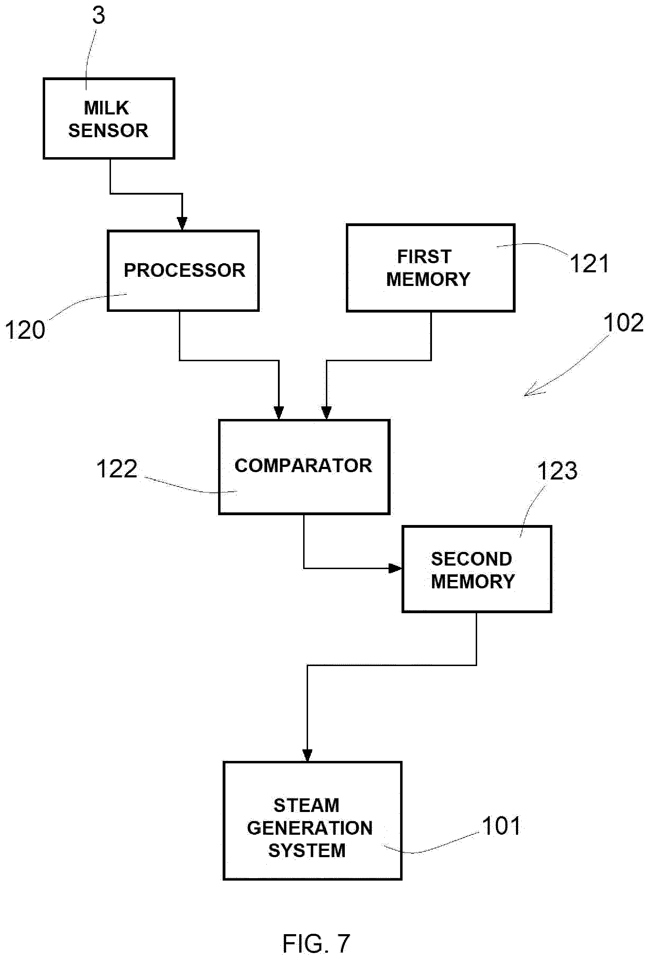

Referring to Fig. 7, the control unit (102) has a processor (120), a first memory (121) in which the electrical conductivity values of the air and of different types of milk are stored, a comparator (122), and a second memory (123) in which various recipes are stored according to the type of milk.

By means of the comparator (122), the control unit (102) compares an electrical conductivity value detected by the milk sensor (3) with the electrical conductivity values stored in the first memory (121) and determines whether the milk sensor is in contact with the milk contained in the milk jug and what type of milk is contained in the milk jug.

Once the type of milk contained in the milk jug is determined, the control unit (102) identifies the recipe associated with that type of milk stored in the second memory (123), and then the control unit (102) controls the steam generation system (101) based on the recipe associated with the type of milk. Otherwise said, the control unit (102) operates the control valve (110) that regulates the flow of steam to be delivered to the steam delivery wand (1) and the solenoid valve of the air for injecting the air into the milk.

Going back to Figs. 4 and 5, advantageously, the first electrode (4) has the shape of a rod and the second electrode (5) has the shape of a ring arranged around the first electrode (4).

The wand (1) comprises a temperature probe (6) suitable for going in contact with the milk contained in the milk jug to detect the temperature of the milk. In such a case, the recipes stored in the second memory (123) are also based on the milk temperature that is continuously measured by the temperature probe (6). Otherwise said, the steam generation system (101) is controlled according to the milk temperature indicated in the recipe. The temperature probe (6) can be a thermocouple.

Advantageously, the temperature probe (6) comprises the first electrode (4) of the milk sensor. As a matter of fact, the temperature probe (6) is made of an electrically conductive metal material and has a rod shape, so it can serve as first electrode of the milk sensor.

The wand (1) comprises an auxiliary duct (11) communicating with the main duct (10). The auxiliary duct (11) is disposed side by side to the main duct (10).

The auxiliary duct (11) terminates inferiorly with a head (7) arranged near the dispensing nozzle (2). The head (7) has an axial conduit (70) in which the first electrode (4) is inserted so that a lower end (40) of the first electrode protrudes inferiorly from the head to go into contact with the milk contained in the milk jug.

The head (7) has a shoulder (71) and a tang (72) protruding superiorly from the shoulder (71). The second electrode (5) is disposed on the shoulder (71) around the tang (72) of the head.

The head (7) is made of an electrically insulating material, such as a plastic material, to isolate the first electrode (4) from the second electrode (5), which are both made of an electrically conducting metal material.

The second electrode (5) has an annular seat (50) in which a gasket (8) is arranged, such as an O-ring seal that presses on an edge of the auxiliary duct (11) to ensure a seal of the head (7).

The tang (72) of the head has an external thread (73) on which a nut (9) arranged in a seat (12) of the auxiliary duct (11) of the wand is screwed.

In view of the above, the auxiliary duct (11) of the wand houses the milk sensor (3) that detects the presence or absence of the milk in the milk jug and additionally the type of milk poured into the milk jug. In addition, the auxiliary duct (11) of the wand also houses the temperature probe (6) for monitoring the temperature of the milk at each processing stage.

The second electrode (5) of the milk sensor is arranged around the temperature probe (6) in order to form a single part, reduce the dimensions and obtain a compact and functional system. The temperature probe (6) has a metal end that is suitable for going in contact with the milk.

When the wand (1) is immersed into the milk (L) contained in the milk jug (200), the milk (L) will close the circuit formed by the first electrode (4) and by the second electrode (5). From the analysis of the electrical conductivity of the milk, which will be different depending on the origin of the milk, it will be possible to discriminate milk of animal origin from milk of vegetable or other origin, and then, by means of the control unit (102), the coffee machine (100) will know which recipes to use to process the milk contained in the milk jug.

With reference to Figs. 1 and 2, the wand (1) is hinged to the frame of the coffee machine at a hinge point (13) arranged at an upper part of the wand. In such a way, the wand (1) can be moved from a closed position (Fig. 1), in which the wand protrudes vertically downward, to an open position (Fig. 2), in which the wand frontally protrudes from the coffee machine.

The coffee machine (100) comprises a position sensor (P) that may be arranged at the hinge point (13) of the wand to detect when the wand is in the open or closed position.

Because of the position sensor (P) and of the milk sensor (3), it is possible to activate a purge of the wand with steam for cleaning purposes, when the wand is placed back in the closed position without milk, allowing the steam to clean the main duct (10) and the dispensing nozzle (2) of the wand with the steam coming out of the dispensing nozzle (2) which will flow into a plate (103) of the coffee machine arranged under the wand (1) and suitable for supporting the milk jug (200).

On the other hand, when the position sensor (P) detects the movement of the wand (1) from open to closed and the milk sensor (3) detects the presence of milk because it is in contact with the milk, an automatic milk preparation procedure can be activated, associating the recipe with the type of milk recognized by the milk sensor (3).

Equivalent variations and modifications may be made to the present embodiment of the invention, within the reach of a person skilled in the art, but still within the scope of the invention as expressed by the appended claims.

## Claims

1. Coffee machine (100) comprising:
- a steam dispensing wand (1) having a dispensing nozzle (2) suitable for being immersed in milk (L) contained in a milk jug (200) to dispense steam into the milk and therefore heat and froth the milk;
- a steam generation system (101) to generate steam that is sent to said wand (1), and
- a control unit (102) to operate said steam generation system (101);
wherein said wand (1) comprises a milk sensor (3) suitable for detecting the presence of milk (L) contained in the milk jug (200); and
said wand (1) comprises a main duct (10) that communicates the steam generation system (101) with the dispensing nozzle (2),
**characterized in that**
said milk sensor (3) is suitable for detecting the type of milk contained in the milk jug (200); and
said wand (1) further comprises an auxiliary duct (11) communicating with the main duct (10);
wherein said milk sensor (3) is housed in said auxiliary duct (11).

2. The coffee machine (100) according to claim 1, wherein said milk sensor (3) is an electrical conductivity sensor suitable for detecting an electrical conductivity value of the milk when the milk is in contact with the milk sensor (3) or a capacitive sensor suitable for detecting a dielectric constant value of the milk when the milk is in contact with the milk sensor (3).

3. The coffee machine (100) according to claim 1 or 2, wherein said milk sensor (3) comprises a first electrode (4) and a second electrode (5) arranged in the wand (1) so as to go in contact with the milk; said first electrode (4) and second electrode (5) being electrically connected to said control unit (102) of the coffee machine which detects a potential difference between the two electrodes (4, 5) which varies according to the material disposed between the two electrodes.

4. The coffee machine (100) according to claim 3, wherein the first electrode (4) has the shape of a rod and the second electrode (5) has the shape of a ring arranged around the first electrode (4).

5. The coffee machine (100) according to any one of the preceding claims, wherein said wand (1) comprises a temperature probe (6) suitable for going in contact with the milk contained in the milk jug to detect the milk temperature.

6. The coffee machine (100) according to claim 5, when dependent on claim 3 or 4, wherein said temperature probe (6) comprises said first electrode (4) of the milk sensor.

7. The coffee machine (100) according to claim 6, wherein the auxiliary duct (11) terminates inferiorly with a head (7) having an axial conduit (70) in which the first electrode (4) is inserted in such a way that a lower end (40) of the first electrode protrudes inferiorly from the head in order to go in contact with the milk;
the head (7) having a shoulder (71) and a tang (72) protruding superiorly from the shoulder (71);
the second electrode (5) being arranged on the shoulder (71) around the tang (72) of the head;
the head (7) being made of electrical insulating material to isolate the first electrode (4) from the second electrode (5).

8. The coffee machine (100) according to any one of the preceding claims, wherein said control unit (102) comprises: a processor (120), a first memory (121) in which the electrical conductivity values of the air and of different types of milk are stored, a comparator (122) and a second memory (123) in which recipes that differ in the type of milk used are stored;
said control unit (102) being suitably configured to:
- compare an electrical conductivity value detected by the milk sensor (3) with the electrical conductivity values stored in the first memory (121) by means of the comparator (122),
- determine whether the milk sensor is in contact with the milk contained in the milk jug and determine the type of milk contained in the milk jug,
- identify the recipe associated with the type of milk contained in the milk jug from the second memory (123), and
- operate the steam generation system (101) according to the recipe associated with the type of milk contained in the milk jug.

9. The coffee machine (100) according to any one of the preceding claims, wherein the wand (1) is hinged to the frame of the coffee machine at a hinge point (13) disposed in an upper part of the wand, so that the wand (1) can be moved from a closed position, in which the wand protrudes vertically downward, to an open position, in which the wand protrudes anteriorly from the coffee machine; the coffee machine (100) comprising a position sensor (P) to detect when the wand is in open position or in closed position.
